**Europäisches Patentamt**

**European Patent Office**

**Office européen des brevets**

(11) Publication number : **0 469 865 A2**

# EUROPEAN PATENT APPLICATION

(21) Application number : **91306988.6**

(51) Int. Cl.$^5$ : **G06K 15/00**, G06F 3/12

(22) Date of filing : **30.07.91**

(30) Priority : **31.07.90 US 560932**

(43) Date of publication of application :
**05.02.92 Bulletin 92/06**

(84) Designated Contracting States :
**DE FR GB**

(71) Applicant : **XEROX CORPORATION**
**Xerox Square**
**Rochester New York 14644 (US)**

(72) Inventor : **Rowold, Alane H.**
**124 Vassar Street**
**Rochester, New York 14607 (US)**

Inventor : **Dahlby, Karen L.**
**22 Rundel Park**
**Rochester, New York 14607 (US)**
Inventor : **Salgado, David L.**
**4 Rundel Park, Apartment 2**
**Rochester, New York 14607 (US)**
Inventor : **Kaisen, Sharon A.**
**26 Valewood Run**
**Penfield, New York 14526 (US)**
Inventor : **Hengst, Acco**
**146 Valley View Drive, Apartment 312**
**Lewisville, TX (US)**

(74) Representative : **Weatherald, Keith Baynes et al**
**Rank Xerox Patent Department Albion House,**
**55 New Oxford Street**
**London WC1A 1BS (GB)**

(54) **Electronic printing.**

(57)     Discloses a method for automatically sorting jobs in a print queue according to the characteristics of the job to be printed and the selected printing priority.

EP 0 469 865 A2

Jouve, 18, rue Saint-Denis, 75001 PARIS

# FIG. 15

```
        ┌──────────┐
        │ SELECT   │
        │ SORT     │
        │ OPTION   │
        └──────────┘
```

NONE —Yes→ LEAVE JOBS IN CURRENT ORDER AND NEW JOBS AT END OF QUEUE

No

FIFO —Yes→ SORTING IN ASCENDING ORDER ACCORDING TO SUBMISSION TIME

No

BINDER FIRST —Yes→ PLACE JOBS REQUIRING BINDING AT THE TOP OF THE QUEUE

No

SHORT JOBS FIRST —Yes→ SORT JOBS IN ASCENDING ORDER ACCORDING TO TIME REQUIRED TO PRINT

No

STOCK MATCH —Yes→ SORT JOBS ACCORDING TO MEDIA REQUIREMENTS

No

The invention relates to electronic reprographic printing systems, and more particularly, to a printing priority system allowing print jobs to be sorted and thus executed in a chosen order.

Electronic printing systems employ image signals, or 'pixels', as the image source when producing prints. One source of image signals is a document scanner which scans the documents that comprise the job and converts images on the documents to the image signals. Electronic printing systems of this type are typically laser or ink jet printers.

In using electronic printing systems, it is sometimes desirable to be able to prioritize the print queue and sort the print jobs into a predetermined order. For example, the operator may want to print all the jobs that require binding first or, print jobs on a first-come, first-served basis. It is advantageous to the operator to be able to complete the task of printing out all jobs in a prioritized order with little or no operator intervention. Prioritization, and hence sorting of the print queue, improves printer productivity as well as decreases operator interaction.

US-A-4,495,582 discloses a control system for presetting operations of a printing press wherein a description of the job is stored in memory and all equipment associated with that job is set automatically to the particular control parameters required. US-A-4,757,348 discloses an electronic reprographic machine wherein different jobs may be batched for controlling job order. US-A-4,829,468 discloses means for controlling a print queue, and thus gives the operator the ability to add, delete, or rearrange jobs in the print queue. US-A-4,887,218 an automated production system which automatically sets up priorities for jobs to be completed, based on criteria such as shortest job first, earliest due date, first-in, first-out, and determination if the job is critical based on various input information. US-A-4947345 discloses a priority system which allows a facsimile machine to have priority over a printer and copier. The user interface may be programmed to allow the jobs already in the output queue to be repositioned within the queue.

The present invention provides a method for establishing the order in which jobs are printed by a printer that prints jobs from a print queue; the print jobs comprising documents being converted to electronic pages for printing by the printer from the print queue, comprising the steps of: selecting the order in which jobs are to be printed; before printing, reviewing the programs for the jobs to identify properties of the jobs, and, using the properties, arranging the jobs in the print queue in accordance with the order selected.

The present invention will now be described by way of example with reference to the accompanying drawings, in which:

Figure 1 is a view depicting an electronic printing system incorporating the printer priority function of the present invention;

Figure 2 is a block diagram depicting the major elements of the printing system shown in Figure 1;

Figure 3 is a plan view illustrating the principal mechanical components of the printing system shovwn in Figure 1;

Figure 4 is a schematic view showing certain construction details of the document scanner;

Figures 5A-5C comprise a schematic block diagram showing the major parts of the system control section;

Figure 6 is a block diagram depicting the operating system, with printed wiring boards and shared-line connections;

Figure 7 is a view of the user interface touchscreen display in the job programming mode displaying examples of job tickets and job scorecards used for programming jobs;

Figure 8 is a view of the user interface touchscreen display depicting the print queue;

Figure 9 is a view of the user interface touchscreen displaying the queue options selection sheet.

Figure 10 is a view of the user interface touchscreen displaying the printer properties sheet;

Figure 11 is a view of the user interface touchscreen displaying the selection of sort options menu of the queue options selection;

Figure 12 is a view of the user interface touchscreen displaying the sort options selection sheet;

Figure 13 is a view of the user interface touchscreen displaying a print queue, a system file and the job option selection sheet;

Figure 14 is a view of the user interface touchscreen displaying the print job option selection sheet for the print queue, and

Figure 15 is a flow chart of the process of the present invention used for selecting a SORT function.

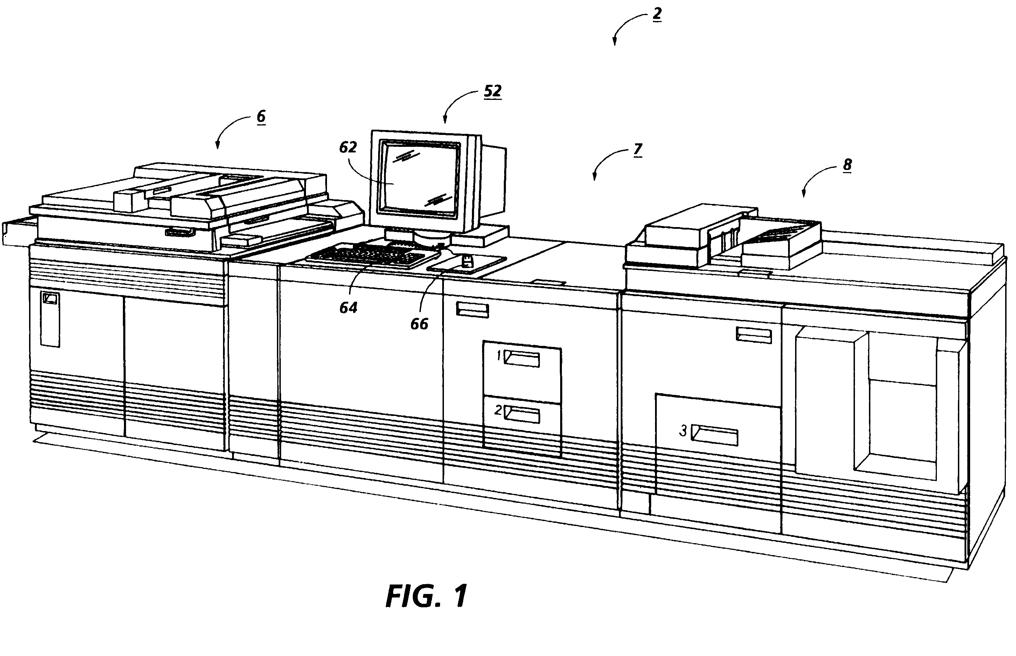

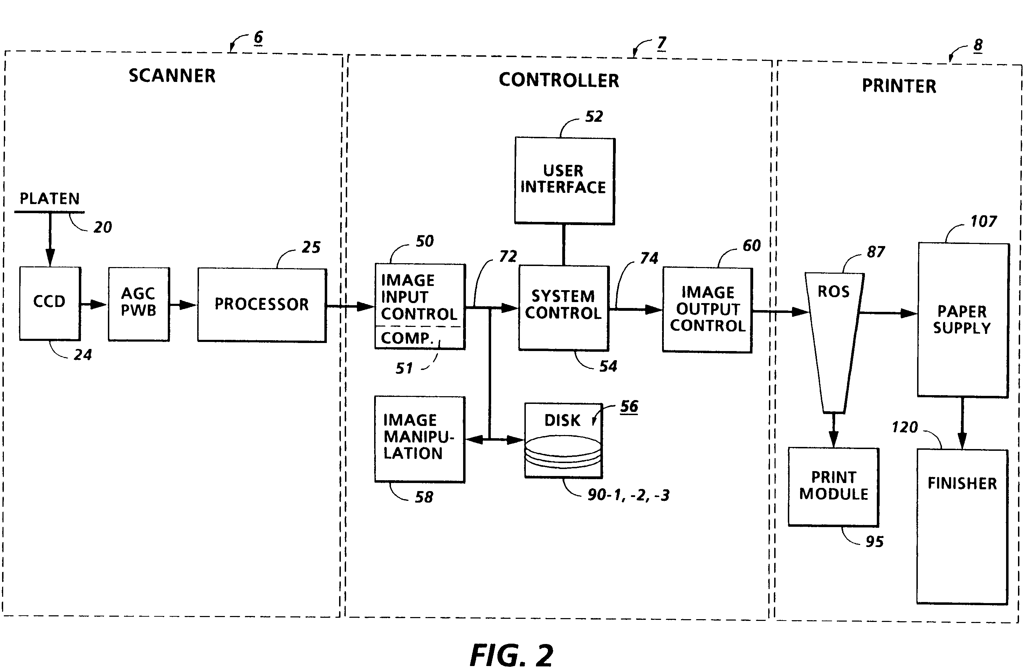

Referring to Figures 1 and 2, there is shown an exemplary laser-based printing system 2 for processing print jobs in accordance with the teachings of the present invention. Printing system 2, for purposes of explanation, is divided into a scanner section 6, controller section 7, and printer section 8. While a specific printing system is shown and described, the present invention may be used with other types of printing systems, such as ink jet, ionographic, etc.

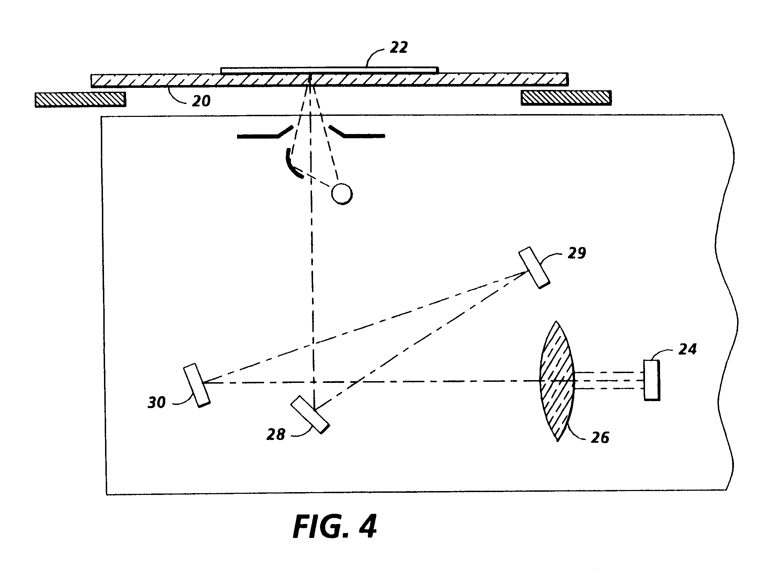

Referring particularly to Figures 2-4, scanner section 6 incorporates a transparent platen 20 on which the document 22 to be scanned is located. One or more linear arrays 24 are supported for reciprocation scanning movement below platen 20. Lens 26 and mirrors 28, 29, 30 cooperate to focus array 24 on a line-like segment of platen 20 and the document being scanned thereon. Array 24 provides image signals or pixels representative of the image scanned which, after suitable processing by processor 25, are output to controller section 7.

Processor 25 converts the analog image signals output by array 24 to digital signals and processes the image signals as required to enable system 2 to store and handle the image data in the form required to carry out the job programmed. Processor 25 also provides enhancements and changes to the image signals, such as filtering, thresholding, screening, cropping, reduction/enlarging, etc. Following any changes and adjustments in the job program, the document must be rescanned.

Documents 22 to be scanned may be located on platen 20 for scanning by automatic document handler (ADF) 35 operable in either a recirculating document handling (RDH) mode or a semi-automatic document handling (SADH) mode. A manual mode, including a book mode and a computer forms feeder (CFF) mode, is also provided, the latter to accommodate documents in the form of computer fanfold. For RDH mode operation, document handler 35 has a document tray 37 in which documents 22 are arranged in stacks or batches. The documents 22 in tray 37 are advanced by suction feed belt 40 and document feed rolls 41 and document feed belt 42 onto platen 20 where the document is scanned by array 24. Following scanning, the document is removed from platen 20 by belt 42 and returned to tray 37 by document feed rolls 44.

For operation in the SADH mode, a document entry slot 46 provides access to the document feed belt 42 between tray 37 and platen 20 through which individual documents may be inserted manually for transport to platen 20. Feed rolls 49 behind slot 46 form a nip for engaging and feeding the document to feed belt 42 and onto platen 20. Following scanning, the document is removed from platen 20 and discharged into catch tray 48.

For operation in the CFF mode, computer forms material is fed through slot 46 and advanced by feed rolls 49 to document feed belt 42 which in turn advances a page of the fanfold material into position on platen 20.

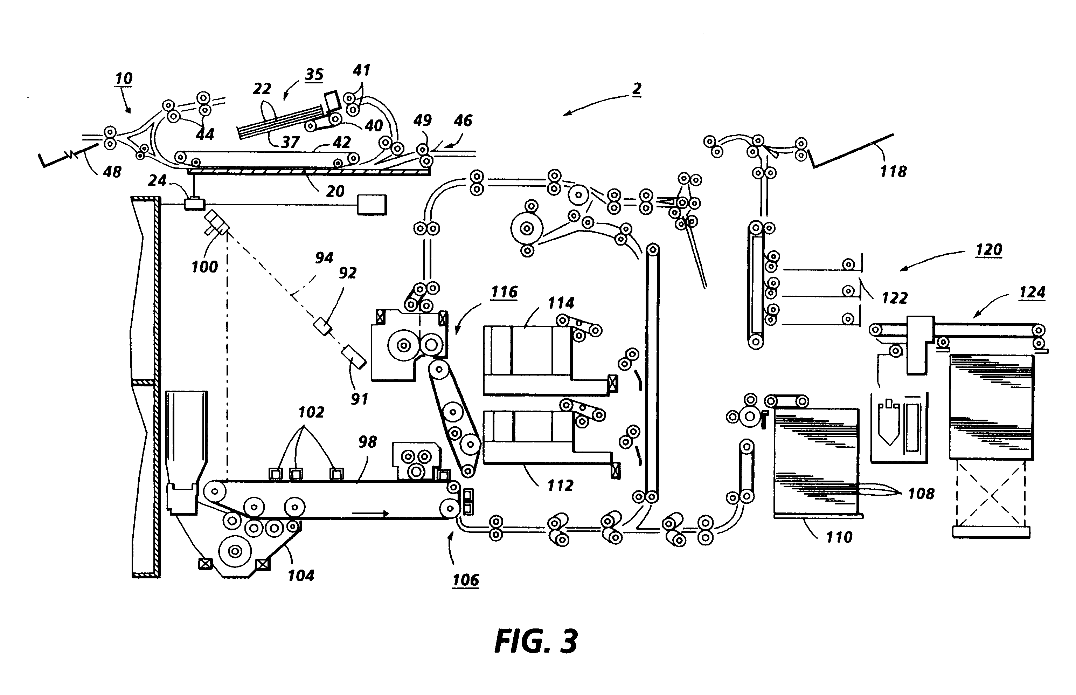

Referring to Figures 2 and 3, printer section 8 comprises a laser printer and, for purposes of explanation is separated into a raster output scanner (ROS) section 87, print module section 95, paper supply section 107, and finisher 120. ROS 95 has a laser 91, the beam of which is split into two imaging beams 94. Each beam 94 is modulated in accordance with the content of an image signal input by acousto-optic modulator 92 to provide dual imaging beams 94. Beams 94 are scanned across a moving photoreceptor 98 of print module 95 by the mirrored facets of a rotary polygon 100 to expose two image lines on photoreceptor 98 with each scan and create the latent electrostatic images represented by the image signal input to modulator 92. Photoreceptor 98 is uniformly charged by corotrons 102 at a charging station preparatory to exposure by imaging beams 94. The latent electrostatic images are developed by developer 104 and transferred at transfer station 106 to a print medium 108 delivered by paper supply section 107. Medium 108 may comprise any of a variety of sheet sizes, types, and colors. For transfer, the print medium is brought forward in timed registration with the developed image on photoreceptor 98 from either a main paper tray 110 or auxiliary paper trays 112 or 114. The developed image transferred to the print medium 108 is permanently fixed or fused by fuser 116, and the resulting prints discharged to either output tray 118 or to finisher 120. Finisher 120 includes a stacker with stitcher 122 for stitching or stapling the prints together to form books and a thermal binder 124 for adhesively binding the prints into books.

Referring to Figures 1, 2 and 5, controller section 7 is divided into an image input controller 50, user literface (UI) 52, system controller 54, main memory 56, image manipulation section 58, and image output controller 60.

The scanned image data input from processor 25 of scanner section 6 to controller section 7 are compressed by image compressor/processor 51 of image input controller 50 on PWB 70-3. As the image data pass through compressor/processor 51, they are segmented into slices N scanlines wide, each slice having a slice pointer. The compressed image data, together with slice pointers and any related image descriptors providing image specific information (such as height and width of the document in pixels, the compression method used, pointers to the compressed image data, and pointers to the image slice pointers), are placed in an image file. The image files, which represent different print jobs, are temporarily stored in system memory 61 which comprises a random access memory (RAM) pending transfer to main memory 56 where the data are held pending use.

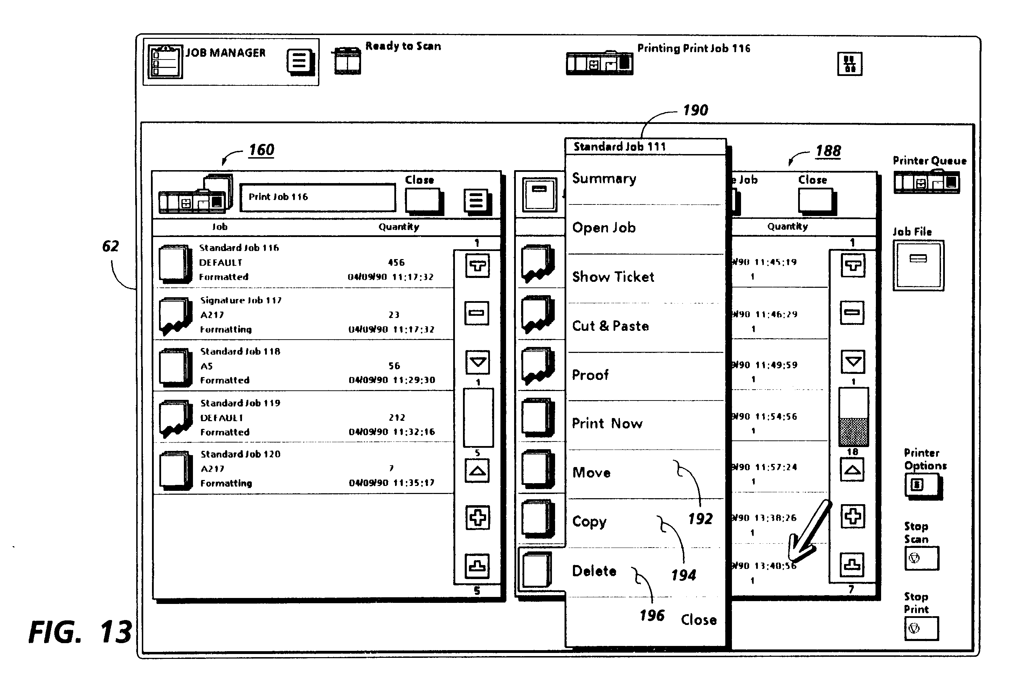

As best seen in Figure 1, UI 52 includes a combined operator controller/CRT display consisting of an interactive touchscreen 62, keyboard 64, and mouse 66. UI 52 interfaces the operator with printing system 2, enabling the operator to program print jobs and other instructions, to obtain system operating information, instructions, programming information, diagnostic information, etc. Following programming and scanning in of the documents that comprise a job, the job data are placed in a job file 188 (shown in Figure 13). Items displayed on touchscreen 62, such as files and icons, are actuated by either touching the displayed item on screen 62 with a finger or by using mouse 66 to point cursor 67 to the item selected and keying the mouse.

Main memory 56 has several hard disks 90-1, 90-2, 90-3 for storing machine operating system software, machine operating data, and the scanned image data currently being processed.

When the compressed image data in main memory 56 require further processing, or are required for display on touchscreen 62 of UI 52, or are required by printer section 8, the data are accessed in main memory 56. Where further processing other than that provided by processor 25 is required, the data are transferred to image manipulation section 58 on PWB 70-6 where the additional processing steps such as collation, make ready, decomposition, etc. are carried out. Following processing, the data may be returned to main memory 56, sent to UI 52 for display on touchscreen 62, or sent to image output controller 60.

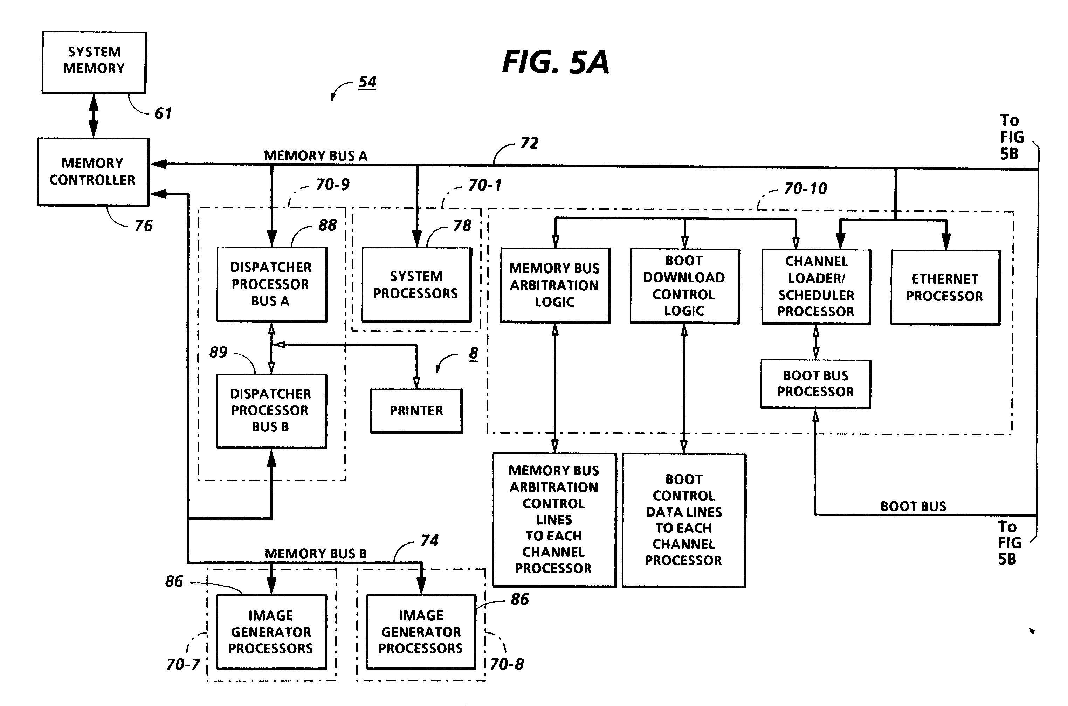

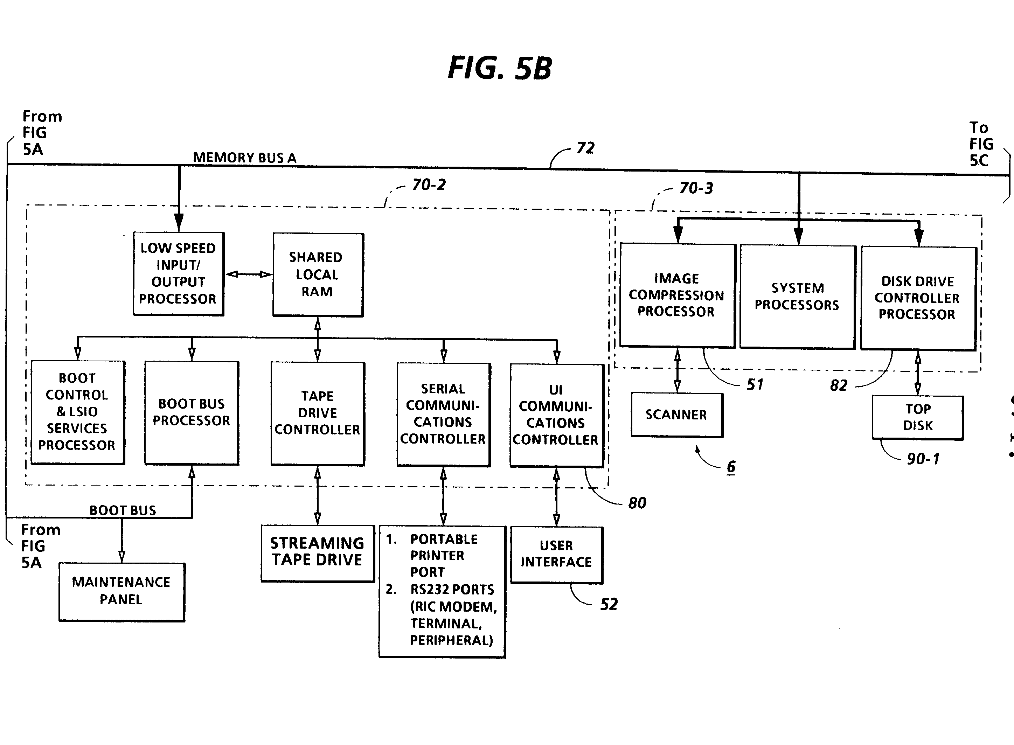

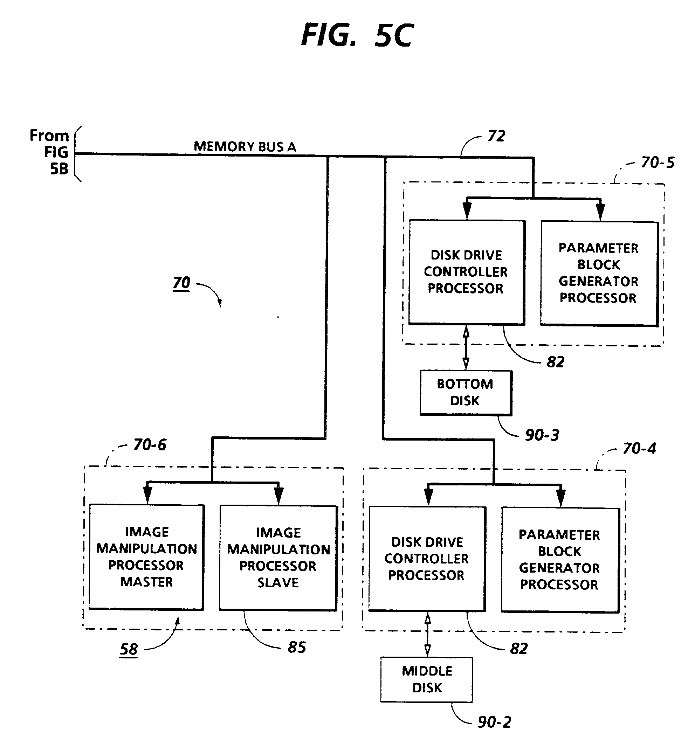

Image data output to image output controller 60 is decompressed and readied for printing by image-generating processors 86 of PWBs 70-7, 70-8 (seen in Figure 5A). Following this, the data are output by dispatch processors 88, 89 on PWB 70-9 to printer section 8. Image data sent to printer section 8 for printing are normally purged from memory 56 to make room for new image data.

Referring particularly to Figures 5A-5C, control section 7 includes a plurality of printed Wiring Boards (PWBs) 70, PWBs 70 being coupled with one another and with System Memory 61 by a pair of memory buses 72, 74. Memory controller 76 couples system memory 61 with buses 72, 74. PWBs 70 include system processor PWB 70-1 having several system processors 78; low speed I/O processor PWB 70-2 having UI communication controller 80 for transmitting data to and from UI 52; PWBs 70-3, 70-4, 70-5 having disk drive controller/processors 82 for transmitting data to and from disks 90-1, 90-2, 90-3 respectively of main memory 56 (image compressor/processor 51 for compressing the image data is on PWB 70-3); image-manipulation PWB 70-6 with image-manipulation processors of image-manipulation section 58; image-generation processor PWBs 70-7, 70-8 with image generation processors 86 for processing the image data for printing by printer section 8; dispatch processor PWB 70-9 having dispatch processors 88, 89 for controlling transmission of data to and from printer section 8; and boot control-arbitration-scheduler PWB 70-10.

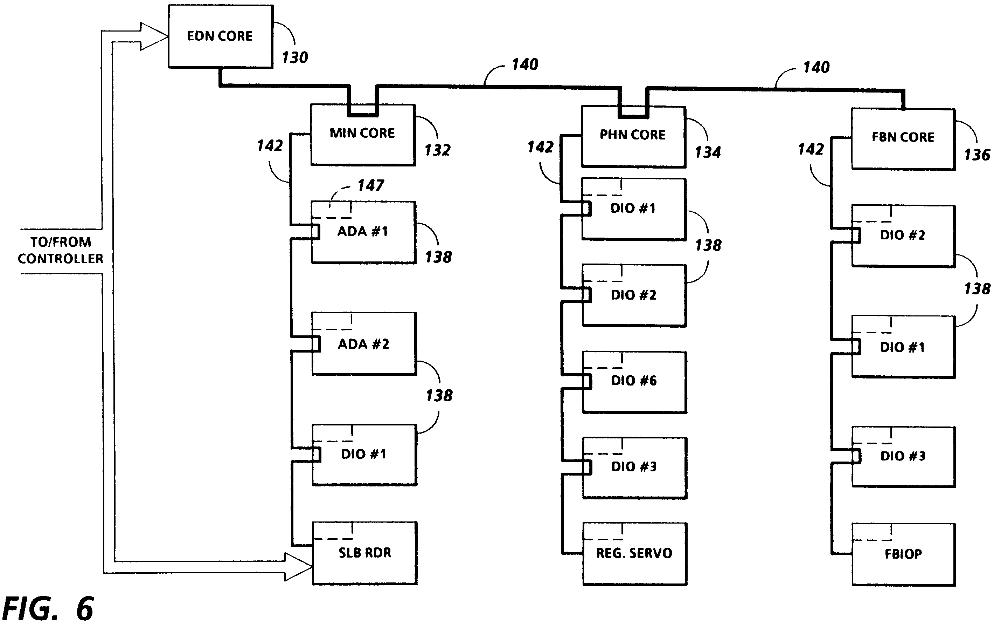

Referring particularly to Figure 6, system control signals are distributed via a plurality of printed wiring boards (PWBs). These include EDN core PWB 130, marking imaging core PWB 132, paper handling core PWB 134, and finisher binder core PWB 136 together with various input/output (I/O) PWBs 138. A system bus 140 couples the core PWBs 130, 132, 134, 136 with each other and with controller section 7 while local buses 142 serve to couple the I/O PWBs 138 with each other and with their associated core PWB.

On machine power up, the operating system software is loaded from memory 56 to EDN core PWB 130 and from there to the remaining core PWBs 132, 134, 136 via bus 140, each core PWB 130, 132, 134, 136 having a boot ROM 147 for controlling downloading of operating system software to the PWB, fault detection, etc. Boot ROMs 147 also enable transmission of operating system software and control data to and from PWBs 130, 132, 134, 136 via bus 140 and control data to and from I/O PWBs 138 via local buses 142. Additional ROM, RAM, and NVM memory types are resident at various locations within system 2.

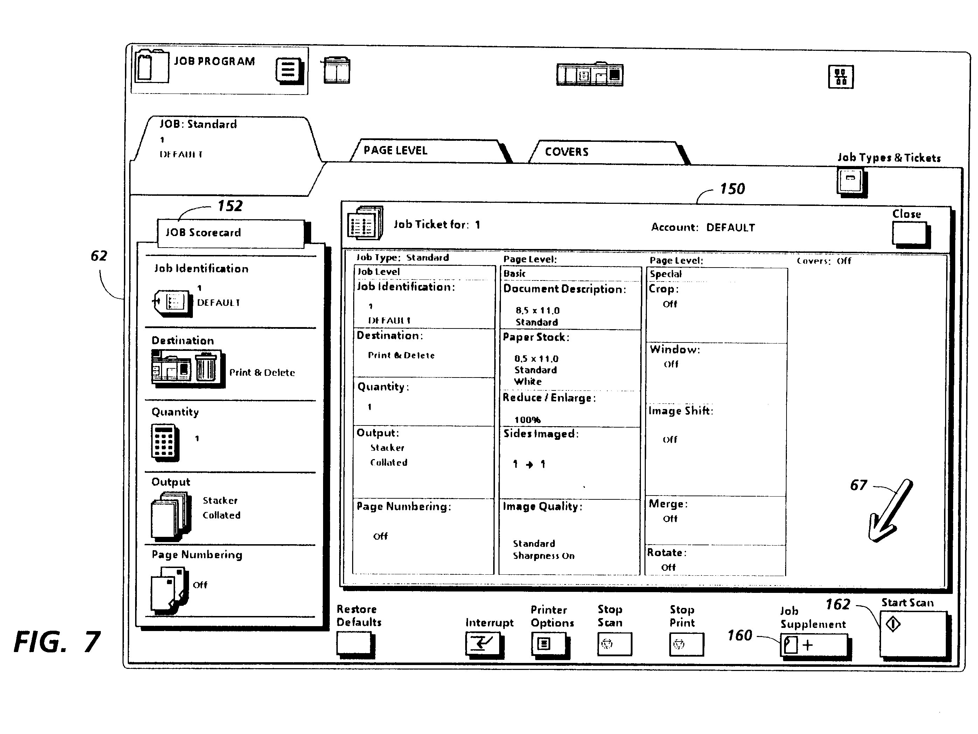

Referring to Figure 7, jobs are programmed in a job program mode in which there is displayed on touchscreen 62 a job ticket 150 and a job scorecard 152 for the job being programmed. Job ticket 150 displays various job selections programmed, while job scorecard 152 displays the basic instructions to the system for printing the job.

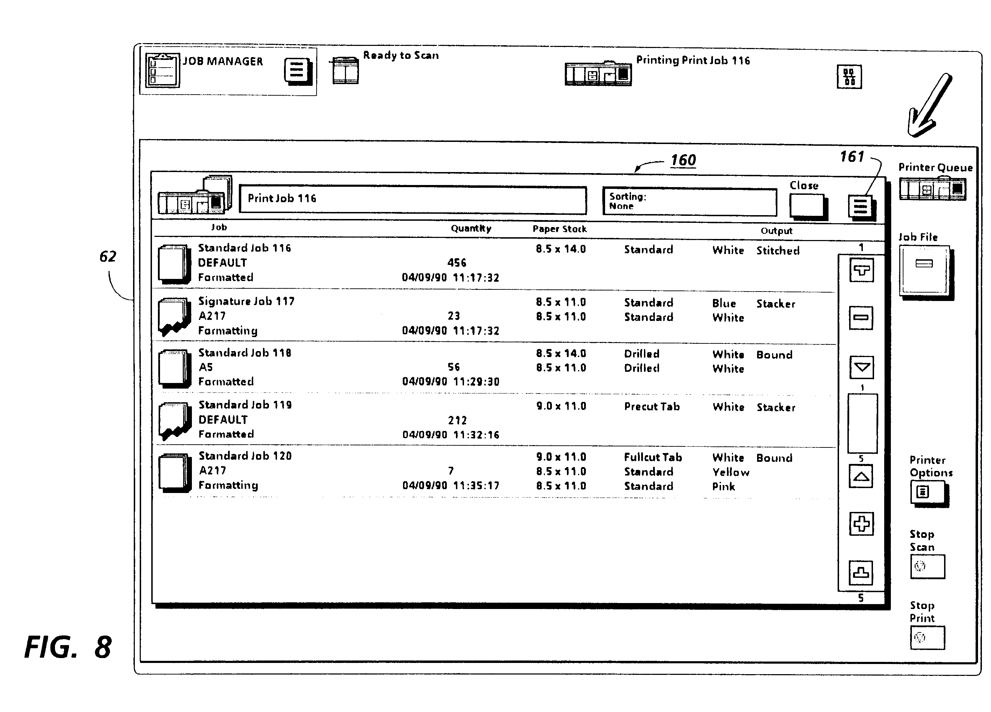

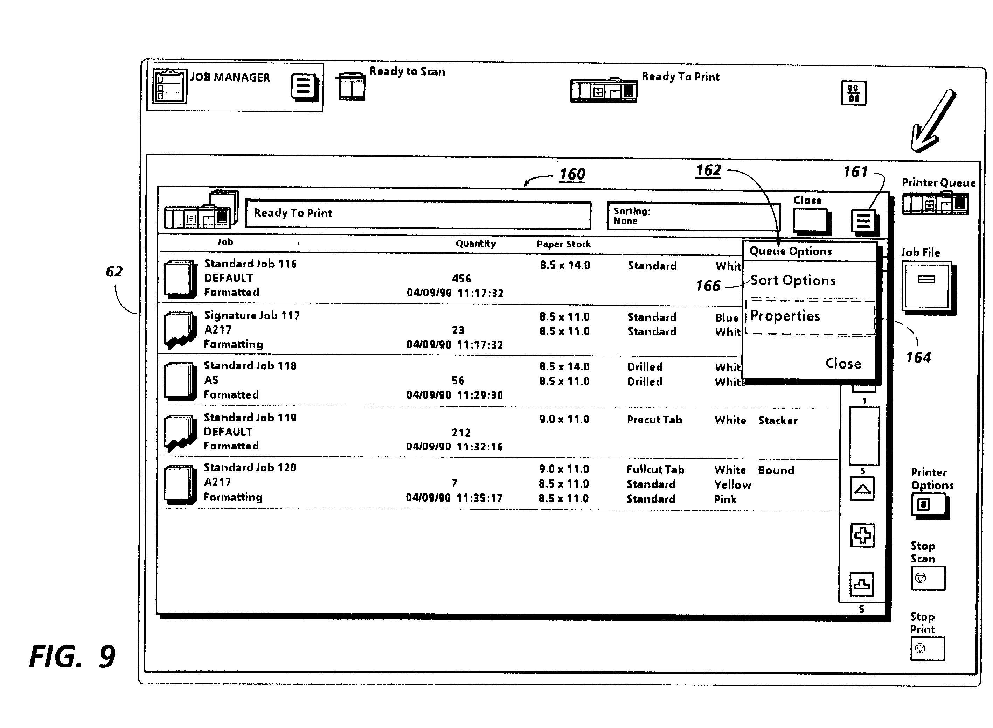

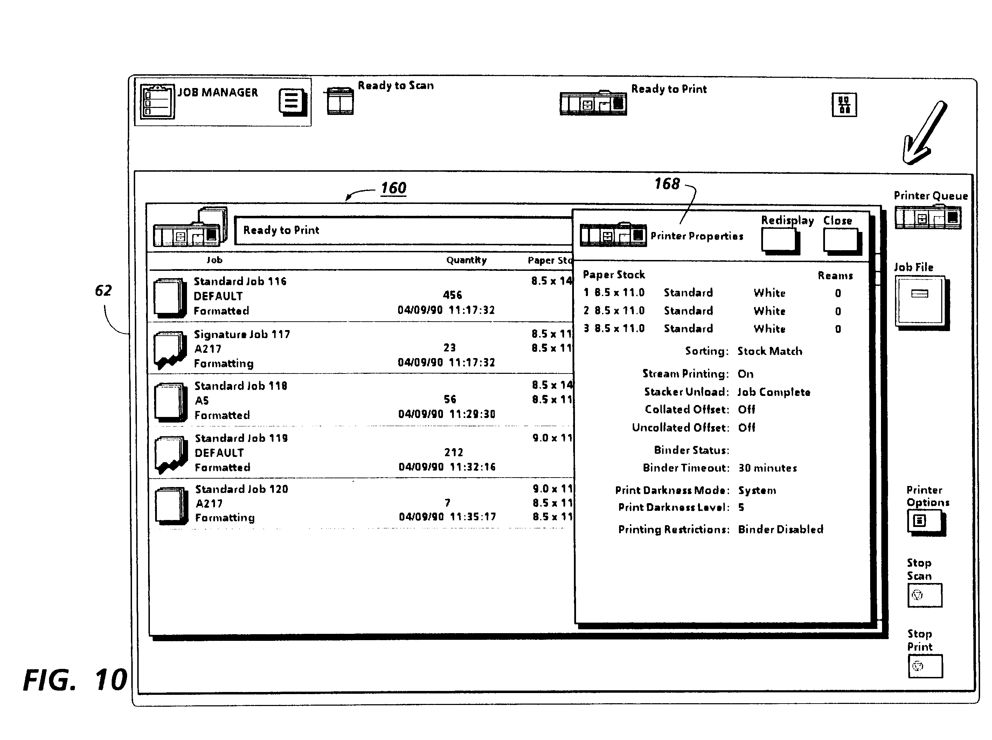

Referring to Figures 8- 10, once jobs are ready for printing by printer 8, a print queue 160 is formed showing the print job along with job characteristics such as time and date the job was submitted to print queue 160, quantity to be printed, media or paper type requirements, and output finishing requirements. Print queue 160 displays jobs in the order to be processed. Queue options menu 162 is displayed by selecting floating menu Icon 161 allowing the operator to select properties selection 164 thus displaying printer properties sheet 168. Printer properties sheet 168 displays the current programming settings of printer 8, i.e., the type of medium (i.e., paper), the sorting option selected, whether stream printing is on or off, finisher (i.e., stacker) status, output order, etc.

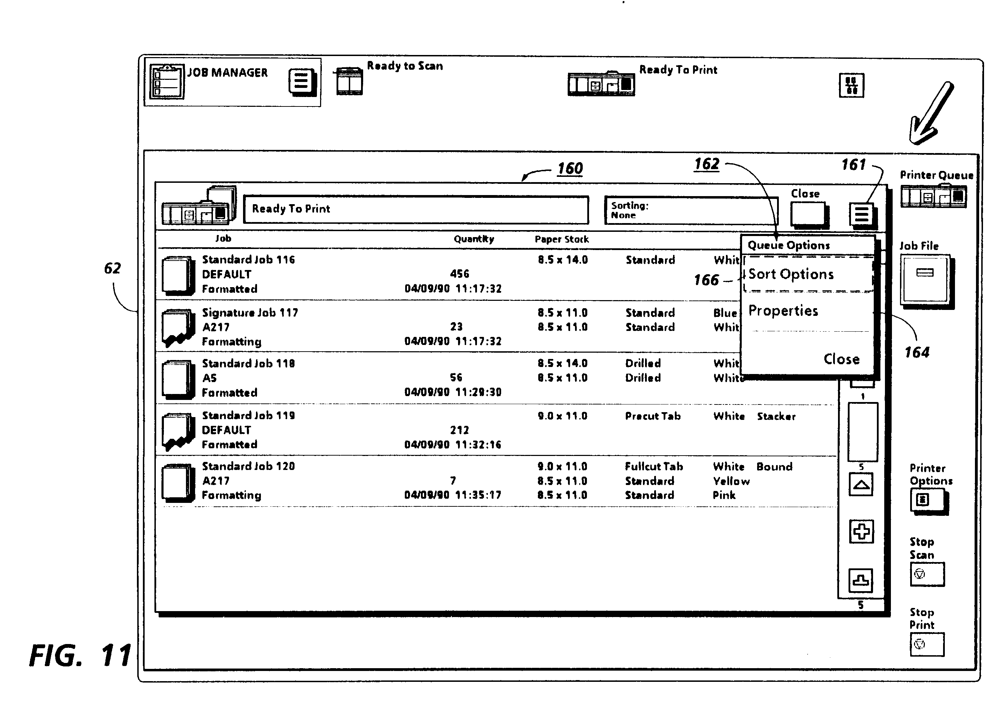

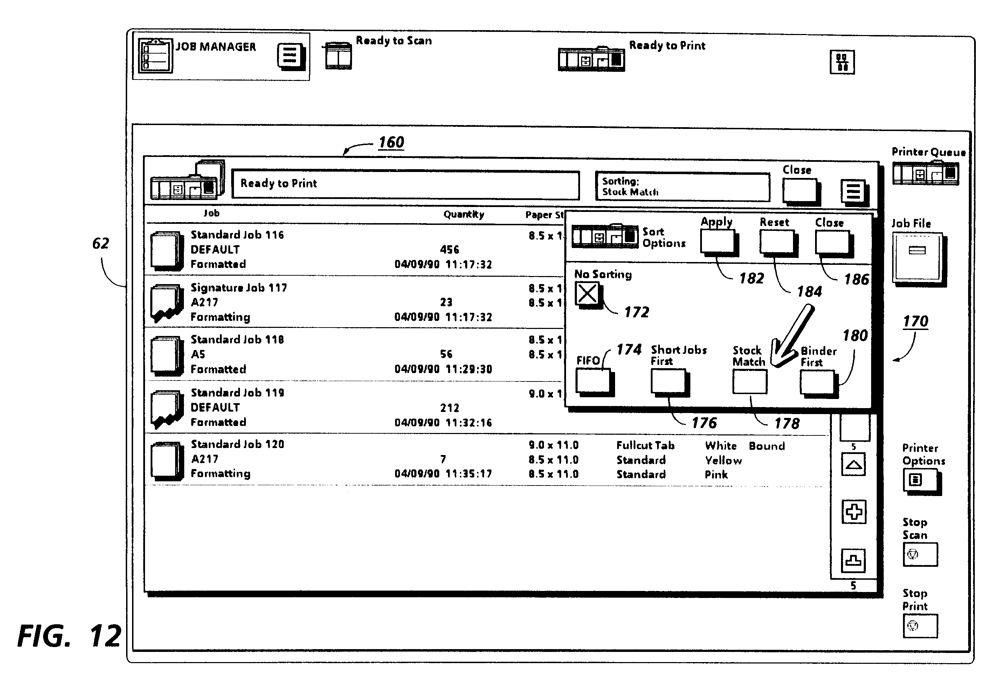

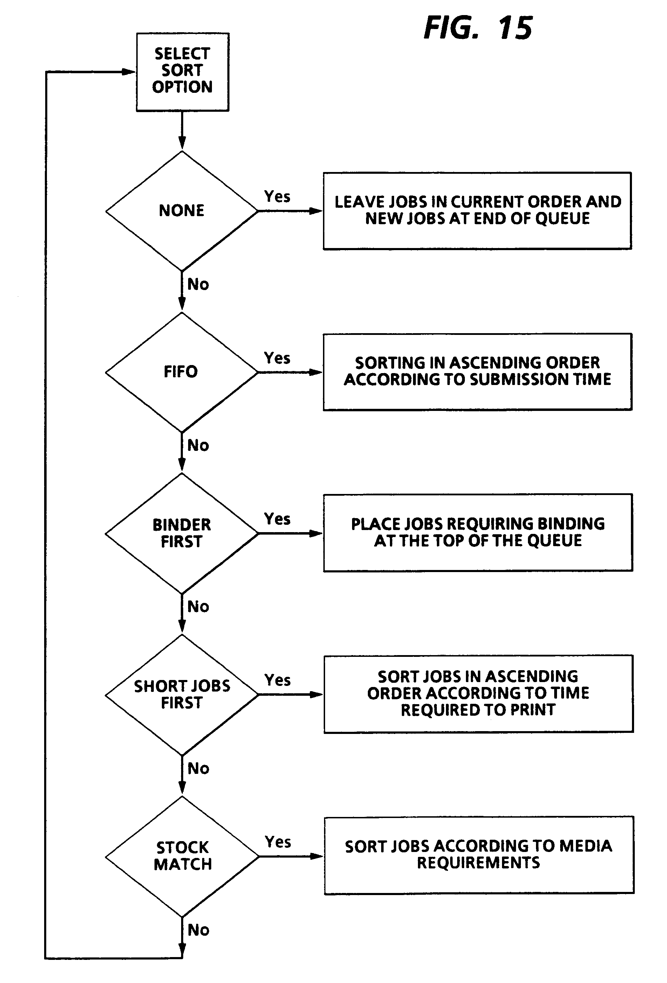

Referring now to Figures 11, 12, and 15, on queue option menu 162 selecting sort options 166 displays sort option sheet 170 which is used to set the printer priority and sort the jobs in print queue 160. Printing priority sorting options selections include no sorting 172, first-in first-out (FIFO) 174, short jobs first 176, stock match 178, and binder first 180. Where 'no sorting' 172 is selected, the jobs are processed in the order currently displayed in print queue 160. In the 'No sorting' option, jobs in the print queue can be positioned manually in whatever order desired. When a new job enters the print queue 160, following scanning of a job by scanner 6, the job is placed at the end of print queue 160. Where FIFO 174 is selected, jobs are sorted in ascending order according to submission time to print queue 160 and thus the jobs are processed in a first-in first-out (FIFO) order. For example, the job entering print queue 160 first will be printed first.

Where short jobs first 176 is selected, jobs in the print queue 160 are sorted in ascending order according to the amount of time required to print, with the job having the shortest print time at the top of print queue 160. Where stock match 178 is selected, jobs are sorted according to medium requirements. There the medium the job needs is compared with the media currently loaded in printer 8. Jobs in which all the media required to print the job are currently loaded in trays 110, 112, 114 (Figure 3) of printer 8 are placed at the top of print queue 160 followed by jobs having all media loaded except one, except two, etc. Within the categories of jobs with any one or two more media loaded in printer 8, the jobs are sorted in descending order according to the media loaded. Print queue 160 is resorted whenever the operator loads a new or different medium into printer 8 according to the media requirements of the jobs in print queue 160 when stock match selection 178 is selected.

Where binder first 180 is selected, jobs requiring binding are placed at the top of print queue 160. When a new job requiring binding enters print queue 160, the new job is placed after the last bind job in the queue. When a new non-bind job enters print queue 160, it is placed at the end of the queue.

Sort option sheet 170 also provides the operator with an apply selection 182 to invoke the selected sorting. Once a sort selection is invoked, the jobs in print queue 160 are placed in the appropriate order depending on the sort option selected overriding any order previously specified within print queue 160. Reset selection 184 returns the sorting selection to the setting prior to opening the sort option sheet 170. Close 186 allows the sort option sheet 170 to be removed from touchscreen 62. The default selection of sort option sheet 170 is no sorting 172.

Jobs having a special status, such as an interrupt status in which the job has special priority that gives the job precedence over other jobs, cannot be selected or rearranged by the sorting selections and are processed on a FIFO basis. The job currently being printed is not affected by selecting a sorting option and is deleted from print queue 160 upon completion of printing.

Referring also to Figure 13, to rearrange jobs in print queue 160 manually or one-by-one, 'No Sorting' 172 is selected. Selection of 'No sorting' deactivates other sorting selections on sort option sheet 170. Selecting a job in job file 188, (e.g., job 56) for rearrangement, displays a job options menu 190 containing a move selection 192 allowing the job to be moved from job file 188 to print queue 160. Jobs moved from job file 188 to print queue 160 are formatted for printing. Where a preceding job is being formatted, the job being formatted will finish formatting and the moved job will be formatted next. Other selections provided by menu 190 include copy 194 which allows jobs to be copied from job file 188 to print queue 160, and delete 196 which allows jobs to be deleted from job file 188.

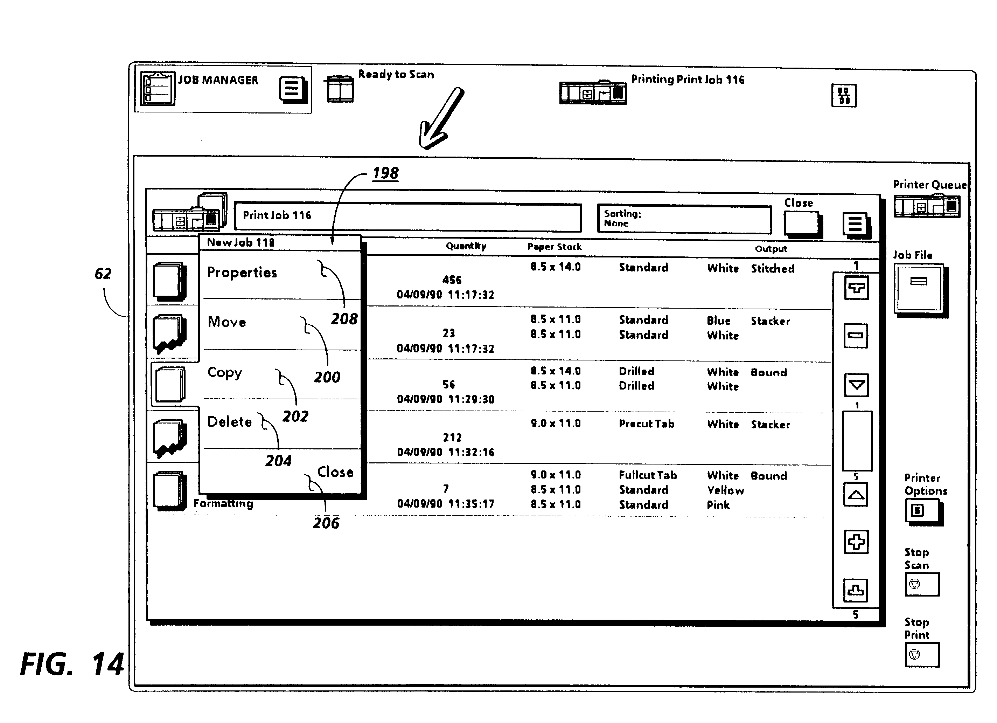

To reorder jobs in print queue 160 manually, highlighting the job displays print job option menu 198 shown in Figure 14. A job highlighted in print queue 160 stays in position in the queue until deselected, and other jobs in the queue move around the selected job print job option menu 198 provides a properties selection 208, allowing the operator to view the properties of the job in print queue 160, and a move selection 200 allowing the user to move a job from printer queue 160 to job file 188. Direct movement of jobs from one place to another within the print queue is prevented. Thus, a job whose position in the print queue is to be changed must be moved into job file 188 (shown in Figure 13) then back to print queue 160 to the location desired within print queue 160. Menu 198 also includes a copy selection 202, allowing a copy of the job in print queue 160 to be saved in job file 188 while retaining the position of the selected job in print queue 160; a delete selection 204 allowing a job to be deleted from print queue 160, and a close selection 206 for closing the queue options menu 198.

If a job in print queue 160 becomes faulted, jobs will move around the faulted job in the queue until all faults of the faulted job are removed. The operator can move a faulted job to the job file 188 using move selection 200, to allow the job to be reprogrammed and the fault(s) corrected. A job which has become faulted because printer 8 needs additional media results in the operator receiving a message, and the faulted job will not advance in print queue 160, and other jobs will move around the faulted job, until the operator adds the required media.

## Claims

1. A method for establishing the order in which jobs in the form of electronic pages are reproduced on a copy medium by a printer having N paper trays for supplying print media on which the jobs can be printed, the jobs being arranged in a print queue, including the steps of:

   selecting the order in which the jobs in the queue are to be printed;

   reviewing the properties of the jobs in the queue to identify the print medium programmed for each job;

   comparing the print medium programmed for each job with the print media in the paper trays; and

   changing the order in which the jobs are arranged in the queue in accordance with the presence of the programmed print medium in the paper trays.

2. The method according to claim 1, including the step of changing the order in which the jobs are arranged in the print queue in response to the print media in the paper trays being changed.

3. The method according to claim 1, including the step of changing the order in which the jobs are arranged in the queue so that jobs having the programmed print media loaded in the paper trays are printed before jobs of which the print media are not loaded.

4. A method for establishing the order in which jobs in the form of electronic pages are printed by a printer, the print jobs being arranged in a print queue for printing in a predetermined order, including the steps of:

a) selecting one of the jobs in the queue for changing to a different position in the queue;

b) in response to selection of the one job, and before its position is changed, preventing the printer from the said one job and

c) repositioning jobs put in the queue after the said one job to in front thereof, while printing of the said one job is prevented, to enable printing of jobs in the queue to continue without interruption.

5. A method for establishing the order in which jobs are printed by a printer that prints jobs from a print queue, the print jobs comprising documents converted to electronic pages, including the steps of:

a) selecting a sort option for establishing order in which jobs in the queue are printed;

b) detecting predetermined job characteristics associated with the selected sort option, and

c) sorting jobs in the queue to be printed in accordance with their job characteristics, wherein the selected sort option arranges jobs in the queue in accordance with the amount of time required by the printer to print each job in the queue.

6. A method for establishing the order in which jobs are printed by a printer that prints jobs from a print queue, the print jobs comprising documents converted to electronic pages, including the steps of:

a) a selecting a sort option for establishing the order in which jobs in the queue are printed;

b) detecting predetermined job characteristics associated with the selected sort option, and

c) sorting jobs in the queue to be printed in accordance with their job characteristics, wherein the selected sort option arranges jobs in the queue in accordance with the finishing requirements of the jobs in the queue.

7. A method according to claim 5 or 6, further including the steps of:

d) insert a new job the queue, and

e) resorting all the jobs in the resultant queue in accordance with the selected sort option.

8. A method according to claim 7, including the step of arranging jobs in the queue so that short jobs are printed before longer jobs.

9. A method according to claim 6, or claims 6 and 7, including the step of arranging jobs in the queue so that jobs requiring binding are printed before jobs not requiring binding.

**FIG. 1**

EP 0 469 865 A2

**FIG. 2**

EP 0 469 865 A2

**FIG. 3**

FIG. 4

# FIG. 5A

*54*

**SYSTEM MEMORY** — 61

**MEMORY CONTROLLER** — 76

MEMORY BUS A — 72

70-9

70-1

70-10

88 **DISPATCHER PROCESSOR BUS A**

78 **SYSTEM PROCESSORS**

**MEMORY BUS ARBITRATION LOGIC**

**BOOT DOWNLOAD CONTROL LOGIC**

**CHANNEL LOADER/ SCHEDULER PROCESSOR**

**ETHERNET PROCESSOR**

89 **DISPATCHER PROCESSOR BUS B**

8 **PRINTER**

**BOOT BUS PROCESSOR**

**MEMORY BUS ARBITRATION CONTROL LINES TO EACH CHANNEL PROCESSOR**

**BOOT CONTROL DATA LINES TO EACH CHANNEL PROCESSOR**

BOOT BUS

MEMORY BUS B — 74

86 — 70-7 **IMAGE GENERATOR PROCESSORS**

**IMAGE GENERATOR PROCESSORS** — 86 — 70-8

To FIG 5B

To FIG 5B

EP 0 469 865 A2

# FIG. 5B

From FIG 5A

To FIG 5C

MEMORY BUS A — 72

70-2

70-3

| LOW SPEED INPUT/ OUTPUT PROCESSOR | SHARED LOCAL RAM |

| BOOT CONTROL & LSIO SERVICES PROCESSOR | BOOT BUS PROCESSOR | TAPE DRIVE CONTROLLER | SERIAL COMMUNI-CATIONS CONTROLLER | UI COMMUNI-CATIONS CONTROLLER |

| IMAGE COMPRESSION PROCESSOR | SYSTEM PROCESSORS | DISK DRIVE CONTROLLER PROCESSOR |

51  82

SCANNER

6

TOP DISK

90-1

80

BOOT BUS

From FIG 5A

MAINTENANCE PANEL

STREAMING TAPE DRIVE

1. PORTABLE PRINTER PORT
2. RS232 PORTS (RIC MODEM, TERMINAL, PERIPHERAL)

USER INTERFACE

52

EP 0 469 865 A2

# FIG. 5C

FIG. 6

EP 0 469 865 A2

JOB PROGRAM

JOB: Standard
1
DEFAULT

PAGE LEVEL

COVERS

Job Types & Tickets

*150*

*152*

JOB Scorecard

*62*

Job Identification
1
DEFAULT

Destination

Print & Delete

Quantity

1

Output

Stacker
Collated

Page Numbering

Off

Job Ticket for: 1          Account: DEFAULT          Close

| Job Type: Standard | Page Level: | Page Level: | Covers: Off |
|---|---|---|---|
| Job Level | Basic | Special | |
| Job Identification: | Document Description: | Crop: | |
| 1 | 8.5 x 11.0 | Off | |
| DEFAULT | Standard | | |
| Destination: | Paper Stock: | Window: | |
| Print & Delete | 8.5 x 11.0 | Off | |
| | Standard | | |
| | White | | |
| Quantity: | Reduce / Enlarge: | Image Shift: | |
| 1 | 100% | Off | |
| Output: | Sides Imaged: | | |
| Stacker | | | |
| Collated | 1 → 1 | | |
| Page Numbering: | Image Quality: | Merge: | |
| | | Off | |
| Off | Standard | | |
| | Sharpness On | Rotate: | |
| | | Off | |

*67*

Restore
Defaults

Interrupt

Printer
Options

Stop
Scan

Stop
Print

Job
Supplement

*162*

*160*

Start Scan

FIG. 7

16

EP 0 469 865 A2

JOB MANAGER    Ready to Scan      Printing Print Job 116

Printer Queue

160    161

| Print Job 116 | | Sorting: None | Close |
|---|---|---|---|

| Job | Quantity | Paper Stock | | Output | |
|---|---|---|---|---|---|
| Standard Job 116 DEFAULT Formatted | 456 04/09/90 11:17:32 | 8.5 x 14.0 | Standard | White | Stitched |
| Signature Job 117 A217 Formatting | 23 04/09/90 11:17:32 | 8.5 x 11.0 8.5 x 11.0 | Standard Standard | Blue White | Stacker |
| Standard Job 118 A5 Formatted | 56 04/09/90 11:29:30 | 8.5 x 14.0 8.5 x 11.0 | Drilled Drilled | White White | Bound |
| Standard Job 119 DEFAULT Formatted | 212 04/09/90 11:32:16 | 9.0 x 11.0 | Precut Tab | White | Stacker |
| Standard Job 120 A217 Formatting | 7 04/09/90 11:35:17 | 9.0 x 11.0 8.5 x 11.0 8.5 x 11.0 | Fullcut Tab Standard Standard | White Yellow Pink | Bound |

62

Job File

Printer Options

Stop Scan

Stop Print

**FIG. 8**

EP 0 469 865 A2

**JOB MANAGER**   Ready to Scan        Ready To Print

Printer Queue

*160*        *162*        *161*

Ready To Print          Sorting: None          Close

| Job | Quantity | Paper Stock | | |
|-----|----------|-------------|---|---|
| Standard Job 116 DEFAULT Formatted | 456 04/09/90 11:17:32 | 8.5 x 14.0 | Standard | Whit... |
| Signature Job 117 A217 Formatting | 23 04/09/90 11:17:32 | 8.5 x 11.0 8.5 x 11.0 | Standard Standard | Blue Whit... |
| Standard Job 118 A5 Formatted | 56 04/09/90 11:29:30 | 8.5 x 14.0 8.5 x 11.0 | Drilled Drilled | Whit... White |
| Standard Job 119 DEFAULT Formatted | 212 04/09/90 11:32:16 | 9.0 x 11.0 | Precut Tab | White  Stacker |
| Standard Job 120 A217 Formatting | 7 04/09/90 11:35:17 | 9.0 x 11.0 8.5 x 11.0 8.5 x 11.0 | Fullcut Tab Standard Standard | White  Bound Yellow Pink |

Queue Options

Sort Options      *166*

Properties

Close      *164*

Job File

Printer Options

Stop Scan

Stop Print

62

1
5
5

18

**FIG. 9**

EP 0 469 865 A2

**JOB MANAGER**   Ready to Scan   Ready to Print

*160*   *168*   Printer Queue

**Ready to Print**   Printer Properties   Redisplay   Close

| Job | Quantity | Paper Sto |
|-----|----------|-----------|

**Paper Stock**   **Reams**

1 8.5 x 11.0   Standard   White   0
2 8.5 x 11.0   Standard   White   0
3 8.5 x 11.0   Standard   White   0

Standard Job 116
DEFAULT   456   8.5 x 14
Formatted   04/09/90 11:17:32

Signature Job 117   8.5 x 11
A217   23   8.5 x 11
Formatting   04/09/90 11:17:32

Standard Job 118   8.5 x 14
A5   56   8.5 x 11
Formatted   04/09/90 11:29:30

Standard Job 119   9.0 x 11
DEFAULT   212
Formatted   04/09/90 11:32:16

Standard Job 120   9.0 x 11
A217   7   8.5 x 11
Formatting   04/09/90 11:35:17   8.5 x 11

Sorting: Stock Match

Stream Printing: On
Stacker Unload: Job Complete
Collated Offset: Off
Uncollated Offset: Off

Binder Status:
Binder Timeout: 30 minutes

Print Darkness Mode: System
Print Darkness Level: 5

Printing Restrictions: Binder Disabled

Job File

Printer Options

Stop Scan

Stop Print

62

**FIG. 10**

EP 0 469 865 A2

**FIG. 11**

JOB MANAGER   Ready to Scan   Ready To Print

Printer Queue

*160*   *162*   *161*

Ready To Print   |   Sorting: None   |   Close

Queue Options

Job File

| Job | Quantity | Paper Stock | | |
|---|---|---|---|---|
| Standard Job 116 DEFAULT Formatted | 456 04/09/90 11:17:32 | 8.5 x 14.0 | Standard | White |
| Signature Job 117 A217 Formatting | 23 04/09/90 11:17:32 | 8.5 x 11.0 8.5 x 11.0 | Standard Standard | Blue White |
| Standard Job 118 A5 Formatted | 56 04/09/90 11:29:30 | 8.5 x 14.0 8.5 x 11.0 | Drilled Drilled | White White |
| Standard Job 119 DEFAULT Formatted | 212 04/09/90 11:32:16 | 9.0 x 11.0 | Precut Tab | White   Stacker |
| Standard Job 120 A217 Formatting | 7 04/09/90 11:35:17 | 9.0 x 11.0 8.5 x 11.0 8.5 x 11.0 | Fullcut Tab Standard Standard | White   Bound Yellow Pink |

Sort Options

Properties

Close

*166*

*164*

62

Printer Options

Stop Scan

Stop Print

1
5
5

EP 0 469 865 A2

**FIG. 12**

JOB MANAGER

Ready to Scan

Ready to Print

160

Ready to Print

Sorting:
Stock Match

Close

Printer Queue

62

| Job | Quantity | Paper St |
|-----|----------|----------|
| Standard Job 116 | | 8.5 x 1 |
| DEFAULT | 456 | |
| Formatted | 04/09/90 11:17:32 | |

Sort
Options

Apply

Reset

Close

Job File

No Sorting

182

184

186

172

170

Signature Job 117
A217                     23        8.5 x 1
Formatting      04/09/90 11:17:32   8.5 x 1

174  Short Jobs
First

Stock
Match

Binder
First

180

Standard Job 118
A5                      56        8.5 x 1
Formatted       04/09/90 11:29:30   8.5 x 1

FIFO

176

178

Standard Job 119
DEFAULT                 212       9.0 x 1
Formatted       04/09/90 11:32:16

| Standard Job 120 | | 9.0 x 11.0 | Fullcut Tab | White | Bound |
| A217 | 7 | 8.5 x 11.0 | Standard | Yellow | |
| Formatting | 04/09/90 11:35:17 | 8.5 x 11.0 | Standard | Pink | |

5

5

Printer
Options

Stop
Scan

Stop
Print

EP 0 469 865 A2

JOB MANAGER

Ready to Scan

Printing Print Job 116

**190**

**160**

Close

Print Job 116

Standard Job 111

**188**

Printer Queue

e Job

Close

| Job | Quantity |
|---|---|

Summary

Open Job

Job File

**62**

| | | 1 |
|---|---|---|
| Standard Job 116 DEFAULT Formatted | 456 04/09/90 11:17:32 | |
| Signature Job 117 A217 Formatting | 23 04/09/90 11:17:32 | |
| Standard Job 118 A5 Formatted | 56 04/09/90 11:29:30 | 1 |
| Standard Job 119 DEFAULT Formatted | 212 04/09/90 11:32:16 | |
| Standard Job 120 A217 Formatting | 7 04/09/90 11:35:17 | |
| | | 5 |

Show Ticket

Cut & Paste

Proof

Print Now

Move

Copy

Delete

**192**

**194**

**196**    Close

Quantity

| | | 1 |
|---|---|---|
| | 9/90 11:45:19 1 | |
| | 9/90 11:46:29 1 | |
| | 9/90 11:49:59 1 | |
| | 9/90 11:54:56 1 | 1 |
| | 9/90 11:57:24 1 | 18 |
| | 9/90 13:38:26 1 | |
| | 9/90 13:40:56 1 | |
| | | 7 |

Printer Options

Stop Scan

Stop Print

**FIG. 13**

FIG. 14

# FIG. 15

```
        SELECT
        SORT
        OPTION
```

NONE —Yes→ LEAVE JOBS IN CURRENT ORDER AND NEW JOBS AT END OF QUEUE

No

FIFO —Yes→ SORTING IN ASCENDING ORDER ACCORDING TO SUBMISSION TIME

No

BINDER FIRST —Yes→ PLACE JOBS REQUIRING BINDING AT THE TOP OF THE QUEUE

No

SHORT JOBS FIRST —Yes→ SORT JOBS IN ASCENDING ORDER ACCORDING TO TIME REQUIRED TO PRINT

No

STOCK MATCH —Yes→ SORT JOBS ACCORDING TO MEDIA REQUIREMENTS

No